# EUROPÄISCHE PATENTSCHRIFT

(11) **EP 2 195 564 B1**
(45) Veröffentlichungstag und Bekanntmachung des Hinweises auf die Patenterteilung: **25.05.2011**
(21) Anmeldenummer: 08802690.1
(22) Anmeldetag: 28.09.2008
(51) Int. Cl.: F16K 11/065

(54) **MISCHBATTERIE**
MIXING FAUCET
ROBINET MÉLANGEUR

(30) Priorität: 27.09.2007 DE 102007046136; 27.09.2007 DE 102007046135
(43) Veröffentlichungstag der Anmeldung: 16.06.2010
(73) Patentinhaber: Heerklotz, Siegfried, 49143 Schledehausen (DE)
(72) Erfinder: Heerklotz, Siegfried, 49143 Schledehausen (DE)
(86) Internationale Anmeldenummer: PCT/EP2008/008250
(87) Internationale Veröffentlichungsnummer: WO 2009/043562

(56) Entgegenhaltungen:
- WO-A-99/02906
- DE-A1- 10 347 819
- US-A1- 2004 060 606

## Beschreibung

Die Erfindung **betrifft** eine Mischbatterie für zwei Flüssigkeiten unterschiedlicher Temperatur gemäß dem Oberbegriff des Anspruchs 1.

Dokument WO 99/02906 offenbart eine Einhandbedienung einer Mischbatterie zum Steuern der Größe oder der Temperatur eines austratenden Volumenstroms.

**Bekannt** sind Mischbatterien mit zwei Drehstellern, die über je ein Schließventil oder ein Schließventil und ein Mischventil zwei eintretende Volumenströme stellen, deren Drehachsen einen Winkel zwischen 60° und 120° einschließen oder beabstandet zueinander verlaufen. Nachteil dieser Mischbatterien ist, dass Größe und Temperatur des austretenden Volumenstroms nur kombiniert durch zwei Greifbewegungen einstellbar sind, wobei beide Bewegungen eine feinfühlige Einstellbarkeit ermöglichen. Dies wird durch einfache, einachsige Drehbewegungen mit Drehwinkeln bis über 360° - erfahrungsgemäß die beste, weil bekannt am sichersten beherrschbare Stellbewegung - erreicht.

Des Weiteren sind Mischbatterien mit einem Stellglied bekannt, das in zwei Freiheitsgraden beweglich ist.

In DE1198150A und DE2724429A1 sind Mischbatterien beschrieben, deren Stellglied über eine Verschiebung in Drehachsenrichtung die Größe des austretenden Volumenstroms stellt und über eine Drehbewegung von maximal 150° das Verhältnis der Größen von zwei eintretenden Volumenströmen. Nachteil ist der begrenzte Drehwinkel von 150°, der keine feine Einstellbarkeit gewährleistet. Die Längsbewegung ist ergonomisch noch ungünstiger und führt nur zu unbefriedigenden Ergebnissen.

In der DE2636517A1 wird ein Stellglied mit zwei Freiheitsgraden gezeigt. Durch Verschiebung in Drehachsenrichtung wird geschaltet, ob die Größe des austretenden Volumenstroms oder das Verhältnis der Größen von zwei eintretenden Volumenströmen durch Drehung des einen Stellgliedes um maximal 180° gestellt wird. Bei der dargestellten Konstruktion erfordert die Änderung der Temperatur zwei Bewegungen, nämlich zunächst die Längsbewegung zum Umschalten und dann die Drehbewegung, was nicht nur umständlich, sondern auch ergonomisch nicht plausibel und damit ungünstig ist. Darüber hinaus ist während der Drehbewegung für eine Stellgröße zusätzlich eine Zug- oder Druckkraft aufzubringen, um die Schaltstellung zu halten. Das erschwert die Handhabung. In direktem Zugriff liegt deshalb trotz des einen direkt zugänglichen Stellgliedes tatsächlich nur eine Stellgröße. Feinfühlige, treffsichere Stellung ist durch den begrenzten Drehwinkel nicht möglich. Die aufwendige Ventilkonstruktion mit je einem Schließ- und Mischventil ist empfindlich und kostenintensiv, das Mischventil schwierig zu reinigen und auszutauschen. Die gesamte Ventilkonstruktion ist überholt.

Am bekanntesten sind die sogenannten Hebelmischer (z.B.: DE3411447A1, DE2324364A) mit einem Hebel-Stellglied als Dreh-Kippsteller mit zwei Freiheitsgraden, bei dem zunächst zum Stellen der Größe des austretenden Volumenstroms die Längsbewegung eines auch drehbaren Steuerkolbens in eine vertikale Kippbewegung des Hebels übersetzt wurde.

Inzwischen ist es Stand der Technik, diese Hebelmischer mit einem Lochscheiben-Mischventil aus Keramik auszurüsten, wobei die bewegliche Lochscheibe in direktem Drehkontakt mit dem Hebel-Stellglied steht. Mittels einer Drehung des Hebel-Stellgliedes wird die Temperatur über das Verhältnis der Größen zweier Eintrittsquerschnitte und mittels einer von der Drehbewegung abhängigen Kippbewegung des gleichen Hebel-Stellgliedes die Größe des austretenden Volumenstroms über die Größe der Eintrittsquerschnitte eingestellt.

Bei diesen Hebelmischern sind nur Kippwinkel von weniger als 30° und Drehwinkel von weniger als 120° realisierbar, was ergonomisch unzureichend ist. Die Kombination zweier an sich einfacher Dreh- bzw. Kippbewegungen am gleichen Stellglied führt zu einer unüberblickbaren und kaum beherrschbaren dreidimensionalen Bewegung, die bei der kurzzeitigen Bedienung intuitiv nicht steuerbar ist. Die Stellbewegung muss nachträglich korrigiert und erfahrungsgemäß in die beiden Grundbewegungen zerlegt werden, wobei die saubere Trennung selten gelingt. Es hat sich gezeigt, dass die beiden in an sich unabhängigen Stellgrößen Größe und Temperatur des austretenden Volumenstroms mit einer kombinierten Dreh-Kippbewegung praktisch für über 90% der Menschen nicht zielsicher einstellbar sind. Unbeabsichtigtes Verstellen, wie Öffnen des Ventils, ist durch einfaches Anstoßen an das Hebel-Stellglied leicht möglich, was ungünstigenfalls zu Verbrühungen führen kann.

Aus der DE10347819A1 ist eine Mischbatterie ohne Mischventil mit zwei koaxialen, hintereinander angeordneten Drehstellern bekannt. Das erforderliche hohe Drehmoment kann hier - auch mit einem Vorgelege - nur durch Hebel aufgebracht werden. Jeder Drehsteller betätigt dabei ein Schließventil für Kalt- bzw. Warmwasser. Das erlaubt keine absichtlich eindeutige Einstellung von Temperatur oder Größe des austretenden Volumenstroms, da sich die Temperatur aus dem Relativdrehwinkel beider Drehsteller ergibt. Dabei sind die Zugriffsrichtungen aufgrund der Hebel weder gleich noch gleichbleibend, so dass eine echte Einhandbedienung - nämlich in einem Zugriff einer Hand - ausgeschlossen ist. Die Stellwinkel sind aufgrund der Untersetzung durch den Innenzahnkranz äußerst gering, was durch das Vorgelege nur geringfügig und unzureichend ausgleichbar ist. Gleichzeitig erhöht es die Differenzen in der Zugriffsrichtung. Feinfühlige, treffsichere Einstellungen sind mit diesem Prinzip unmöglich.

Thermostat-Mischer (z.B.: DE3118003A1, DE10044684A1, EP0242680A2) bieten zwei einachsige Drehsteller, die zwar Drehwinkel von 180° für die Größe und 360° für die Temperatur des austretenden Volumenstroms zulassen, jedoch in ergonomisch ungünstiger Weise mit entgegengesetzter Zugriffsrichtung weit beabstandet angeordnet sind. Das erfordert zwei Greifbewegungen und entgegengesetzte Drehbewegungen und schließt damit bequeme Einhandbedienung aus.

Einbau-Thermostatmischer (DE10048041A1) zum teilweisen Wandeinbau sind mit zwei koaxialen, hintereinander angeordneten Drehstellern versehen, wobei Drehwinkel von etwa 360° (für die Temperatur) und knappe 90° (für die Größe des austretenden Volumenstroms) aus zwei zumindest nah beieinander liegenden Zugriffsrichtungen einstellbar sind. Dabei ist der vordere, rotationssymmetrische Drehsteller für die Temperatur endseitig erfass- und stellbar, der hintere Drehsteller für die Größe des austretenden Volumenstroms wegen des hohen Drehmomentes nur über einen radialen Hebel, was keine echte Einhandbedienung zulässt. Beide Stellbewegungen sind nur über zwei Zugriffe erreichbar, wobei sich die Zugriffsrichtung des Hebels während der Stellbewegung absolut und vor allem relativ zur Zugriffsrichtung des vorderen Drehstellers ändert. Das Einstellen der Temperatur ist naheliegender und leichter möglich, als das Einstellen der Größe des austretenden Volumenstroms. Das ist ergonomisch unzulänglich, da der Start des Volumenstroms über die Einstellung seiner Größe erfolgt, was für die Bedienung höchste Priorität hat. Darüber hinaus ist ein Einbau-Thermostat eben nur nach aufwendigem Wandeinbau, also nicht für die üblichen und weitaus häufigsten "Aufputz-" Spül-, Waschtisch-, Dusch- und Badarmaturen geeignet.

Der Erfindung liegt die **Aufgabe** zugrunde, eine Mischbatterie zu schaffen, die eine der Absicht entsprechende zielsichere Einstellung der beiden Zielgrößen Größe und Temperatur des austretenden Volumenstroms möglichst direkt, bequem, eindeutig sowie unabhängig voneinander erlaubt, dabei unbeabsichtigte Betätigungen - durch z.B. bloßes Anstoßen - ausschließt, prinzipiell die Voraussetzungen für echte Einhandbedienung in einer permanenten Zugriffrichtung schafft und bewährte Ventiltechnologien auch bei Thermostatmischem mit geringen Mehrkosten verwendet.

Diese Aufgabe wird nach der **Erfindung** durch ein Wandelgetriebe gelöst. Durch dieses Wandelgetriebe sind Bewegungsart, -lage und/oder -größe der Steuergröße in die erste Rotationsstellgröße auf einer zur Gleitebene des Lochscheibenventils insbesondere parallelen Ebene überführbar. Dieses Wandelgetriebe ist so effizient, dass es leichtgängig ohne Hebelverstärkung nur mittels zweier Fingerkuppen auf jeweils einander etwa gegenüber liegenden Seiten der Mantelfläche des Drehstellers in im wesentlichen nur einer Position einer zugeführten Hand wahlweise die unabhängig eindeutige und sichere Einstellung beider Rotationsstellgrößen über den gesamten Stellbereich ermöglicht.

**Bei dieser Ausgestaltung** der Mischbatterie transformiert das einfache und kostengünstige Wandelgetriebe durch eine Bewegungswandlung, wie z. B. auch Versetzung und/oder Umlenkung, einen durch die Ventiltechnologie vorgegebenen Freiheitsgrad des Steuerteils eines Lochscheibenventils als Steuergröße in die ergonomisch günstigste Stellbewegung zur Handhabung und ermöglicht dadurch den Einsatz verschiedener, bewährter Ventiltechnologien - wie Keramik-Lochscheibenventil, thermostatgesteuertes Ventil -, deren Konstruktion gegebenenfalls zur Optimierung zu verändern ist.

Das Wandelgetriebe eröffnet nicht nur prinzipiell eine einfache Möglichkeit für Übersetzungen von weit über 2, sondern schafft auch die Voraussetzung dafür, dass die beiden Zielgrößen Temperatur und Größe des austretenden Volumenstroms in ergonomisch optimaler Bewegungslage, in optimaler Bewegungsart, mit optimaler Bewegungsgröße in Form von Stellbereich und Stellkraft unabhängig voneinander, d. h. absichtlich eindeutig und treffsicher zu stellen sind. Voraussetzung ist dazu, dass beide Stellbewegungen in keiner Weise gekoppelt sind.

Dieses erfindungsgemäße Konzept mit einem beziehungsweise mehreren Wandelgetrieben erlaubt Konstruktionen, bei denen die ergonomisch am einfachsten und präzisesten zu handhabende einachsige Drehbewegung mittels zweier auf jeweils einander etwa gegenüber liegenden Seiten der gegenüber ihren Stellbewegungen im wesentlichen invarianten, hebelfreien Außenmantelflächen der Drehsteller anlegbarer Fingerkuppen für beide Rotationsstellgrößen in ergonomisch günstigster Lage unabhängig voneinander realisiert ist. Jeder Drehsteller hat nur einen rotatorischen Freiheitsgrad gegenüber dem ortsfesten Gehäuse. Unbeabsichtigte Betätigung ist prinzipiell ausgeschlossen.

Die Invarianz erlaubt den Zugriff unabhängig von der aktuellen Winkellage des Drehstellers. Das bedeutet der Zugriff erfordert keine bestimmte Handhaltung. Das ist Bedienungskomfort, weil für den Zugriff weder das Erkennen der aktuellen Winkellage des Drehstellers noch eine entsprechende Anpassung der Handhaltung erforderlich ist und Voraussetzung für den leichten Wechsel zwischen zwei Drehstellern. Invarianz lässt sich durch Rotationssymmetrie zur Drehachse erzielen. Das ist im einfachsten Fall ein glatter Zylinder mit der Drehachse als Symmetrieachse.

Für einen sicheren Formschluss zwischen Fingerkuppen und Außenmantelfläche sind geringe Abweichungen von der Rotationssymmetrie - z. B. durch gerundete Polygone wie Dreirund, Vierrund ... - vorteilhaft. Sie sollten jedoch so weit begrenzt werden, dass keine besondere Position oder Handhaltung beim Zugriff erforderlich wird, um nicht den Bedienungskomfort einzuschränken.

Alternativ können für einen sicheren Reib- oder auch Formschluss die Außenmantelflächen der Drehsteller in Axialrichtung gerändelt sein, oder auch mit Längsrippen von 1 bis 2mm Dicke und bis zu 3mm Höhe oder Rillen von 1 bis 2mm Tiefe versehen sein. Sie lassen sich so anordnen, dass die Rotationssymmetrie der Drehsteller und damit ihre Invarianz gegenüber Drehung um ihre Drehachse im wesentlichen nicht oder für die Handhaltung zumindest vernachlässigbar eingeschränkt wird.

Mit der Erfindung können darüber hinaus zwei Drehsteller konstruktiv mit gleicher Zugriffsrichtung so angeordnet werden, dass diese Drehsteller nach Zuführung einer Hand aus im wesentlichen nur einer Position wahlweise allein durch Bewegung der Finger bequem, d. h. auch leichtgängig, betätigt werden können. Das schafft die Voraussetzung für eine echte, von an sich bekannten "Einhandmischem" wesentlich abweichende, eindeutige und sichere Einhandbedienung über nur zwei Fingerkuppen.

Darüber hinaus lässt sich die wichtigere Einstellung der Größe des Volumenstroms - ergonomisch richtig - in Zugriffsrichtung leichter und damit bevorzugt erreichbar und einstellbar anordnen, so dass die Summe aller dieser Vorzüge höchsten Bedienungskomfort schafft.

Durch Verwendung eines einfachen, ebenen Wandelgetriebes aus beispielsweise Spritzkunststoff entstehen nur geringe Mehrkosten, so dass die Kosten bei einem Lochscheiben-Mischventil mit denen der Hebelmischer, üblicher Mischer der Mittelklasse, oder bei einem Thermostatventil mit denen der Einbau-Thermostate vergleichbar sind.

Die Erfindung erlaubt eine sehr kompakte, stabile Bauweise mit sowohl Gehäuse- und Drehsteller-Ausführungen in dünnem Edelstahlrohr, als auch in Messingguß oder Kunststoff.

Damit eröffnet die erfinderische Kombination von Wandelgetrieben mit hebelfreien Einhand-Finger-Drehstellern den Weg für eine große Vielfalt von gestalterisch ausgewogenen Designvarianten.

**In weiterer Ausgestaltung** der Erfindung ist die Stellbewegung der Fingerkuppen der zugeführten Hand ohne Armbewegung und ohne wesentliche Verlagerung der Hand wahlweise in eine der beiden Rotationsstellgrößen schaltbar. Daraus ergibt sich komfortabelste Einhandbedienung auch bei der Einstellung beider Rotationsstellgrößen in einem Zugriff. Dies ist insbesondere bei altersgerechten Badausrüstungen von Interesse, um zum Beispiel für eine auch behindertengerechte Ausrüstung des Sanitärbereichs zu sorgen.

Das Wandelgetriebe ermöglicht durch Übersetzung einer Steuergröße in die entsprechende Rotationsstellgröße mit einem Übersetzungsverhältnis von 1,6 bis über 4 ein Einstellen mit praktisch beliebig begrenzbarem Drehmoment und damit die Leichtgängigkeit einer Rotationsstellgröße zu bestimmen und sicherzustellen. Gleichzeitig lassen sich nahezu beliebig große Stellwinkel bis weit über 250° erzielen. Daraus ergibt sich höchster ergonomischer Bedienungskomfort mit feinfühliger, treffsicherer Einstellung. Diese Übersetzung des Wandelgetriebes kann auch durch ein zusätzliches Getriebe erfolgen oder verstärkt werden.

Ist das Wandelgetriebe in seiner Gesamtform als Kreisscheibe ausgebildet, die zur Gleitebene des Lochscheibenventils parallel beabstandet angeordnet ist, ergibt das den kompaktesten Aufbau in vollkommener Zylinderform, da die Mittelachse des Wandelgetriebes mit allen Drehachsen der Drehsteller und Rotationsstellgrößen identisch gewählt werden kann.

Es vereinfacht die Konstruktion, wenn sich die Drehachsen der Rotationsstellgrößen und der zugehörigen Drehsteller jeweils oder sogar alle schneiden, im einfachsten Fall identisch sind. Eine weitere Vereinfachung ergibt sich, wenn die Drehachsen der Rotationsstellgrößen normal zur Gleitebene der Lochscheiben und damit zu der Ebene angeordnet sind, in der die Steuergrößen liegen. Das gilt sowohl in dem Fall, dass eine rotatorische Steuergröße der beweglichen Lochscheibe durch z. B. ein Planetengetriebe in eine Rotationsstellgröße umgewandelt wird, als auch bei Umwandlung einer translatorischen Steuergröße in eine Rotationsstellgröße.

Sind die Rotationsstellgrößen einachsige Drehungen, deren Drehachsen, insbesondere mit der Drehachse der/des Drehsteller/s, identisch sind, sind die Voraussetzungen für den einfachsten formalen Aufbau, nämlich in der Grundform eines gegenüber den Stellbewegungen invarianten Zylinders mit endseitiger Zugriffsrichtung in Drehachsenrichtung, geschaffen.

Aus ergonomischen alsauch künstlerisch gestalterischen Gründen kann es jedoch vorteilhaft sein, wenn die Drehachsen der Drehsteller zu den Drehachsen der Rotationsstellgrößen einen Winkel > 0° - etwa im Bereich 30° - einschließen. Dann ist konstruktiv einfacher, wenn sie sich schneiden.

Der geringste Aufwand zum Stellen - d.h. die bequemste, ergonomischste Lösung - wird dadurch erreicht, dass jeweils nur zwei, drei Fingerkuppen aus immer gleicher Zugriffsrichtung auf einer oder zwei rotationssymmetrischen Außenmantelflächen wahlweise und unabhängig von der aktuellen Relativlage des Drehstellers platziert werden können, die dann mithilfe der Fingerkuppen ohne Hand- oder gar Armbewegung drehbar sind. Der Wechsel erfolgt ebenfalls ohne Hand- und Armbewegung durch geringe Verschiebung der Fingerkuppen, entweder von Außenmantelfläche zu Außenmantelfläche oder mit der Außenmantelfläche.

Ergonomisch sollte die Einstellung der Größe des Volumenstroms beim Zugriff mit höherer Priorität - d.h. "blind" automatisch - erreicht werden. Das bedeutet, dass die Rotationsstellgröße zum Stellen der Größe des austretenden Volumenstroms aus Zugriffsrichtung direkter, also einfacher und leichter, stellbar ist. Dies wird konstruktiv dadurch erreicht, dass das erforderliche Drehmoment zur Stellung der Größe des Volumenstroms geringer oder zumindest nicht wesentlich größer als das der Rotationsstellgröße zum Stellen der Temperatur ist, dass ein schaltbarer Drehsteller mit der Rotationsstellgröße zur Einstellung der Größe des Volumenstroms als ständige Voreinstellung gekuppelt ist bzw. dass bei zwei Drehstellern derjenige zur Einstellung der Größe beim Zugriff zuerst erreicht wird.

Bei der Ausführung als einfache Mischbatterie wird die Dosier- und Mischfunktion mit einem 2-Scheiben-Lochscheibenventil als Mischventil realisiert, wobei dessen zwei Steuergrößen mit jeweils einer Rotationsstellgröße nahezu unabhängig voneinander stellbar sind. Die Temperatur des austretenden Volumenstroms ist über eine Rotationsstellgröße durch das Verhältnis der Größen zweier über die Zulaufbohrungen in das Mischventil eintretenden Volumenströme unterschiedlicher Temperatur von Hand einstellbar.

Bei erfindungsgemäßer Ausführung als Einhandthermostat ist ein 2-Scheiben-Lochscheibenventil ein Schließventil, das einen üblichen Drehwinkel von 65 bis 90° als Steuergröße für die Größe des austretenden Volumenstroms aufweist. Dessen Temperatur wird in einem Thermostatventil als Mischventil durch ein thermostatisches Element nach der - Rotationsstellgröße für die Temperatur als Sollwert gesteuert.

Im Stand der Technik sind Thermostatmischer mit koaxialen Drehstellern gleicher Zugriffsrichtung mit Innengehäuse und Gehäuse aufgebaut, wobei der Drehsteller für den Temperatur-Sollwert in dem Innengehäuse gelagert ist, das die Rotationsstellgröße für die Größe des Volumenstroms vom ringförmigen Drehsteller, der hinter dem endseitigen Drehsteller für die Temperatur angeordnet ist, zum Lochscheibenventil überträgt. Dies entspricht weder der ergonomischen Priorität der Volumenstellung, noch bietet es unabhängige Stellbewegungen.

Die ergonomisch richtige Handhabung lässt sich erzielen, indem Innengehäuse und Gehäuse sich teilweise durchdringen. Das Gehäuse wird in einen äußersten Teil und einen innersten Teil geteilt, in dem die Drehachse der Rotationsstellgröße für die Temperatur ortsfest gelagert ist. Das Innengehäuse wird zwischen diesen Teilen angeordnet und mit Durchbrüchen versehen, durch die zum äußersten Teil hin offene Streben des innersten Teils bis zum Abstützungskontakt zentrierend hindurch greifen. Breite der Streben, Größe der Durchbrüche und Anzahl beider auf dem Umfang werden so abgestimmt, dass das Innengehäuse gegenüber dem zweiteiligen Gehäuse um den maximalen Drehwinkel des Lochscheibenventils verdrehbar ist.

Bei einer Ausführung der erfindungsgemäßen Mischbatterie mit einem zweiten einachsigen Drehsteller für die zweite Rotationsstellgröße wird direkter Zugriff auf jede Rotationsstellgröße geschaffen. Dadurch können beide Rotationsstellgrößen jeweils mit einer großzügigen, einfach beherrschbaren einachsigen Drehung direkt und eindeutig ohne - unplausiblen und erschwerenden - Zusatzaufwand gestellt werden.

Für Einhandbedienung sollte die Drehachse des zweiten Drehstellers dicht beabstandet, möglichst parallel zur Drehachse des ersten Drehstellers verlaufen. Je dichter die Drehsteller mit einer Zugriffsrichtung angeordnet werden, desto bequemer wird die Einhandbedienung. Sind ihre Drehachsen identisch, lassen sich beide Drehsteller in nur einem Zugriff einer Hand bedienen. Wenn sie direkt hintereinander angeordnet sind, werden die Fingerkuppen nur leicht - um ca. 2 cm - im wesentlichen in Richtung ihrer Drehachse verschoben, um zum gewünschten Drehsteller zu wechseln und dadurch die Drehbewegung der Finger in eine der beiden Rotationsstellgrößen zu schalten. Bei endseitigem Zugriff in Drehachsenrichtung ergibt dieses den ergonomisch optimalen Aufbau. Die Drehsteller bilden gegenüber den Stellbewegungen im wesentlichen invariante Rotationskörper.

Mit einem Radial-Hebel kann die Drehstellung verdeutlicht und zusätzlich die Stellkraft reduziert werden, was sich aber bei der Erfindung erübrigt. Er verkompliziert aber die Stellbewegung insbesondere bei großzügigen, präzis zu stellenden Stellwinkeln und erlaubt bei zwei Drehstellern keine echte Einhandbedienung. Mit der aktuellen Relativlage ändert sich die Zugriffrichtung, die vor Zugriff und Stellvorgang erst zu erkennen ist, um die Zugriffbewegung darauf abstimmen zu können.

Ein Schaltgetriebe als das erfindungsgemäß ausgeführte Wandelgetriebe ermöglicht z.B. über eine Wechselkupplung das Schalten der Drehbewegung der Finger an einem Drehsteller zu den beiden Rotationsstellgrößen wahlweise. Ein Drehsteller mit einem zusätzlichen Freiheitsgrad zum Umschalten zwischen den beiden Rotationsstellgrößen hat naturgemäß für beide Stellbewegungen eine einheitliche Zugriffsrichtung und auch eine identische Drehachse. Er ist auf kürzeste Weg direkt zugänglich. Die Rotationsstellgrößen sind eindeutig mit einer einachsigen Drehung zu stellen. Nur die erste liegt jedoch in direktem Zugriff und ist eine einfache Drehung, wenn beispielsweise eine Feder den Drehsteller als Voreinstellung in der Schaltposition für die erste Rotationsstellgröße hält. Die Einstellung der zweiten Rotationsstellgröße erfordert vor der Drehbewegung ein Umschalten und während der Drehbewegung eine Haltekraft, die der Stellkraft überlagert werden muss.

Einfachster Fall für die Umschaltung ist eine Schubbewegung in Richtung der Drehachse - entweder durch Drücken oder Ziehen. Eine Schubbewegung etwa orthogonal zur Richtung der Drehachse ist ebenso möglich wie eine Schwenk- oder Kippbewegung des Drehstellers oder eines Teils der Mischbatterie.

Als Wechselkupplung kommen Reib- oder auch Zahnkupplungen als Radial-, Axial- oder Kegelkupplungen in Betracht. Vorteil der Reibkupplung ist der kurze Schaltweg und das problemlose Kuppeln in jeder Relativdrehstellung der Rotationsstellgrößen. Vorteil der Zahnkupplung ist die geringere Haltekraft, die nicht als höhere Normalkraft erst die erforderliche Haft-Reibkraft erzeugen muss, sondern nur die Schaltfeder zu überwinden hat und die sichere Drehmomentübertragung nach erfolgtem Kupplungsvorgang.

Bei Anwendung des erfindungsgemäßen Konzepts in einem Einhand-Thermostaten kann der Drehwinkel von etwa 90° der beweglichen Lochscheibe durch ein Planetengetriebe, das ganz innerhalb des Drehstellers angeordnet werden kann, im Eingang über Steg oder Hohlrad in die Rotationsstellgröße am Sonnenrad übersetzt werden, das mit dem Drehsteller mit identischer Drehachse drehfest verbindbar ist. Das durch Dichtungen und Dichtfett hohe Drehmoment der Steuergröße und gleichzeitig ihr geringer Drehwinkel lassen sich mit mehr als 3-facher Übersetzung in eine ergonomisch bequeme Stellbewegung wandeln.

Als einfaches, zuverlässiges Ventil für beide Funktionen Mischen und Dosieren bietet sich ein 2-Scheiben-Lochscheibenventil als Mischventil aus Keramik an, dessen zumindest erste Steuergröße eine Verschiebung einer ersten beweglichen Lochscheibe des Lochscheibenventils mit insbesondere einem Loch gegenüber einer zweiten mit ihr in einer Berührungsfläche in Flächenkontakt angeordneten, im Gehäuse festgelegten und mit zwei Zulaufbohrungen und insbesondere einer Auslaufbohrung versehenen Lochscheibe ist.

Eine zweite Steuergröße kann insbesondere ein Freiheitsgrad einer dritten gegenüber der in ihrer Berührungsfläche in Flächenkontakt angeordneten ersten Lochscheibe und/oder zweiten Lochscheibe beweglichen Lochscheibe des Lochscheibenventils als vorzugsweise Mischventil sein.

Einfacher ist die Nutzung zweier voneinander unabhängiger Freiheitsgrade der ersten Lochscheibe gegenüber der zweiten Lochscheibe für die zwei Steuergrößen des Lochscheibenventils als insbesondere Mischventil. Dazu kann als zweiter Freiheitsgrad eine Drehung oder eine zur ersten Verschiebung orthogonale zweite Verschiebung verwendet werden, wodurch bei der Einstellung der Temperatur die Größe des Volumenstroms nicht verändert wird und umgekehrt. Die Zielgrößen Temperatur und Größe lassen sich so eindeutig unabhängig voneinander bestimmen. Die bewegliche erste Lochscheibe mit einem Loch steht mit der im Gehäuse festgelegten zweiten Lochscheibe mit zwei Zulaufbohrungen und einer Auslaufbohrung in einer Berührungsfläche insbesondere über ein Fett in Flächenkontakt.

Prinzipiell können Steuerteil und bewegliche Lochscheibe identisch sein. Aus konstruktionstechnischen Gründen empfiehlt es sich jedoch, die Steuergrößen über ein mit der beweglichen Lochscheibe in direktem Abstützungskontakt stehendes Steuerteil auf die Lochscheibe zu übertragen.

Auch eine zweite Steuergröße des Steuerteils eines Ventils lässt sich entweder durch einen zusätzlichen Freiheitsgrad des ersten Wandelgetriebes oder durch ein eigenes zweites Wandelgetriebe in die zweite Rotationsstellgröße übertragen.

Sie kann aber im Falle eines rotatorischen Freiheitsgrades auch selbst als Rotationsstellgröße direkt genutzt werden. Beide sind dann identisch und können gleichzeitig auch die Drehung des zweiten Drehstellers sein.

Eine sehr elegante Lösung für ein geeignetes ebenes Wandelgetriebe ist ein Kurvenscheibengetriebe aus einer als Ring ausgebildeten Spiralnutscheibe und einem Schieber, dessen Kulisse in der spiralförmigen Führungsnut geführt ist, wobei das Zentrum der Spirale vorteilhaft auf der Drehachse der Spiralnutscheibe angeordnet ist. Der Schieber trägt einen Mitnehmer, der in eine Nut des Steuerteils eingreift, deren Länge seiner Breite und der Verschiebung des anderen Freiheitsgrades entspricht. Die Lochung ermöglicht das Hindurchführen des Mitnehmers eines zweiten Schiebers und/oder die drehbare Lagerung der Kurvenscheibe auf einer Welle, deren Außendurchmesser dem Lochdurchmesser entspricht. Selbstverständlich ist hier auch die kinematische Umkehrung möglich, bei der die Führungsnut durch eine Führungsrippe auf der Kurvenscheibe und die Kulisse durch eine Nut im Schieber ersetzt sind.

Die einfachste, symmetrischste und kompakteste Konstruktion entsteht, wenn die Drehachsen zumindest einer Rotationsstellgröße und zumindest der zugehörigen Kurvenscheibe identisch sind, oder sogar auch die Drehachse des Drehstellers mit ihnen identisch ist. Dann lassen sich Drehsteller und Kurvenscheibe auf einer gemeinsamen Welle, vorzugsweise dem Hals einer Kartusche drehbar lagern, beide insbesondere drehfest miteinander verbinden und vorzugsweise einstückig ausführen. Sind die Drehachsen beider Rotationsstellgrößen, beider Kurvenscheiben und beider Drehsteller identisch, lassen sich alle auf einer einzigen ortsfesten Welle ohne Reibkontakt beider Rotationsstellgrößen lagern.

Eine Kartusche verbindet Ventil und Wandelgetriebe zu einer Baueinheit. Sie vermindert die Geräuschabgabe über die Luft und gibt allen Ventil- und Getriebegliedern Führung und Halt. So können ein Schieber in einer Nut der Kartusche verschiebbar und eine Kurvenscheibe mit einer Lochung oder Buchse auf einer Welle der Kartusche oder mit einer Welle oder ihrem Außenrand in einer Bohrung der Kartusche oder auch an der Innenseite eines kreisrunden Kartuschenmantels drehbar gelagert sein. Die Kartusche dient auch der leichten Montage beim Austausch des Ventils oder Wandelgetriebes.

Mit einem zweiten insbesondere ebenen Wandelgetriebe ist die zweite Steuergröße des Lochscheibenventils als Mischventil oder eines zweiten Ventils in die zweite Rotationsstellgröße umwandelbar. Beim Einsatz von zwei - vor allem ebenen - Wandelgetrieben für die beiden Freiheitsgrade der beweglichen Lochscheibe ist es vorteilhaft, die Wandelgetriebe in Flächenkontakt übereinander anzuordnen, wobei es Voraussetzung ist, dass ein Wandelgetriebe einen gestellfesten Durchlass, wie z. B. bei einem Kurvenscheibengetriebe eine zur Drehachse der Kurvenscheibe konzentrische Lochung, aufweist, um die Kraftübertragung des anderen hindurchleiten zu können.

Im Falle von Kurvenscheibengetrieben mit Nutscheiben können dann jeweils Nutscheibe und Schieber abwechselnd blockartig übereinander geschichtet werden. Sie geben sich gegenseitig Führung und Halt. Dies ergibt den kompaktesten, stabilsten und bei identischen Drehachsen der Kurvenscheiben auch prinzipiell einfachsten Aufbau, bei dem große Teile der Wandelgetriebe innerhalb der Drehsteller untergebracht werden können.

**Weitere Merkmale** und Vorteile der Erfindung ergeben sich aus den Ansprüchen und der nachstehenden Beschreibung in Verbindung mit den Zeichnungen, in denen zwei Ausführungsbeispiele des Gegenstands der Erfindung schematisch veranschaulicht sind.

In den **Zeichnungen** zeigen:
- **Fig. 1**: eine perspektivische Darstellung einer erfindungsgemäßen Mischbatte- rie, wobei der Einfachheit halber auf die Darstellung des üblichen Aus- laufarms und der Zulaufanschlüsse verzichtet wurde,
- **Fig. 2**: eine weitere perspektivische Darstellung der gleichen Ausführungs- form, bei der des besseren Einblicks wegen nur das Ventil und die Wandelgetriebe explosionsartig in Vertikalrichtung jeweils um 5 mm zueinander beabstandet dargestellt sind, unter Weglassung der Drehsteller, der Kartusche und des Gehäuses,
- **Fig. 3**: eine weitere perspektivische Darstellung der gleichen Ausführungs- form, bei der jeweils ein Drehsteller mit der dazugehörigen Kurven- scheibe explosionsartig in Vertikalrichtung um jeweils 20 mm zum an- liegenden Teil beabstandet dargestellt ist, unter Fortfall des Gehäuses,
- **Fig. 4**: eine perspektivische Darstellung eines zweiten Ausführungsbeispiels einer erfindungsgemäßen Mischbatterie, wobei auf die Darstellung des üblichen Auslaufarms und der Zulaufanschlüsse verzichtet wurde,
- **Fig. 5**: ein symbolischer Schnitt durch den Stellmechanismus des vereinfacht dargestellten zweiten Ausführungsbeispiels einer erfindungsgemäßen Mischbatterie, wobei das Thermostatventil 2 mit dem thermostatischen Element 45 nur als Blackbox, Durchbrüche 64 und diese durchdrin- gende Streben 63 als fette, punktierte Linien dargestellt und Auslauf- arm und Anschlüsse weggelassen sind.

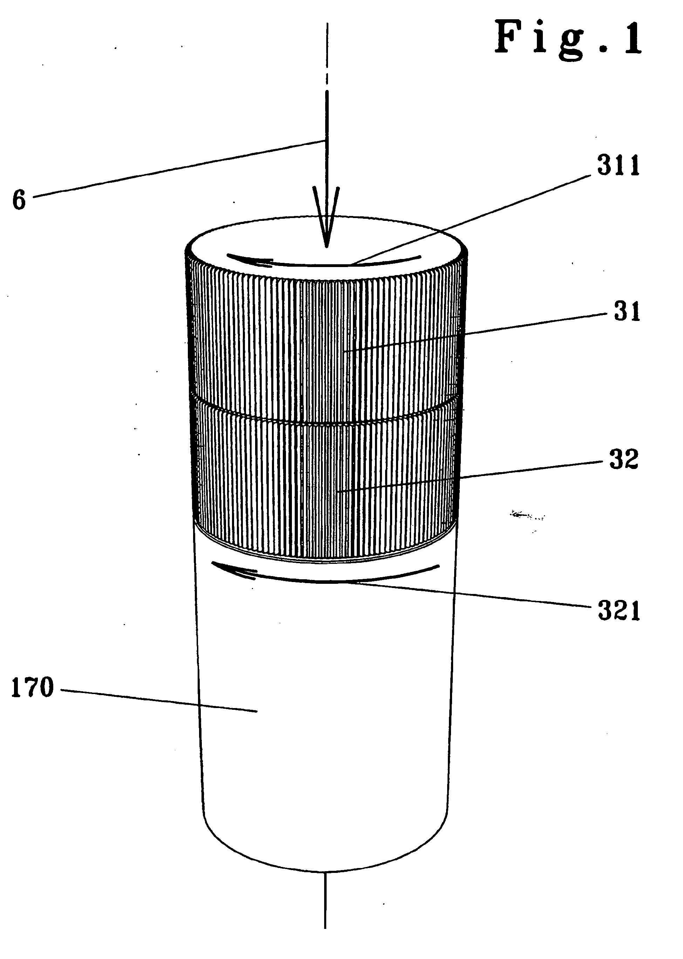

In **Fig. 1** ist die Mischbatterie in der üblichen Außenansicht dargestellt. Die beiden gegenüber ihren Stellbewegungen invarianten zylinderförmigen Drehsteller 31,32 mit jeweils einem einachsigen, rotatorischen Freiheitsgrad 311,321 sind direkt übereinander angeordnet. Ihre Zugriffsrichtung 6 ist gleich und über den gesamten Stellbereich konstant. Ihre Aussenmantelflächen sind gerändelt, um sicheren Reibschluss auch mit seifigen Fingern zu gewährleisten. Ihre Drehachsen sind identisch mit der Mittelachse des ebenfalls zylinderförmigen Gehäuses 170. Diese aufrechte Anordnung entspricht dem Einsatz der Mischbatterie an Spülen oder Waschbecken. Die greifende Hand kommt endseitig von oben parallel zu den Drehachsen. Die Länge des Gehäuses 170 unter den beiden Drehstellern 31,32 beträgt ergonomisch vorteilhaft zwischen 45 und 200 mm.

Der vorteilhafte Außendurchmesser für beide Drehsteller 31,32 liegt zwischen 25 und 50 mm. Wenn der Außendurchmesser des Gehäuses 170 denen der Drehsteller 31,32 entspricht, zwischen 40 und 50 mm. Ihre Höhe ist vorteilhaft je nach Durchmesser jeweils 15 bis 40 mm, um die Bedienung in einem Griff einer Hand sicher zu ermöglichen.

Bei der Verwendung der Mischbatterie an Duschen oder Badewannen wird die Mischbatterie um 90° in waagerechte Lage gedreht angeordnet, so dass die beiden Drehsteller 31,32 nach vorn zum Benutzer zeigen. Die Gehäuselänge hinter den Drehstellern 31,32 beträgt dann etwa 65 mm.

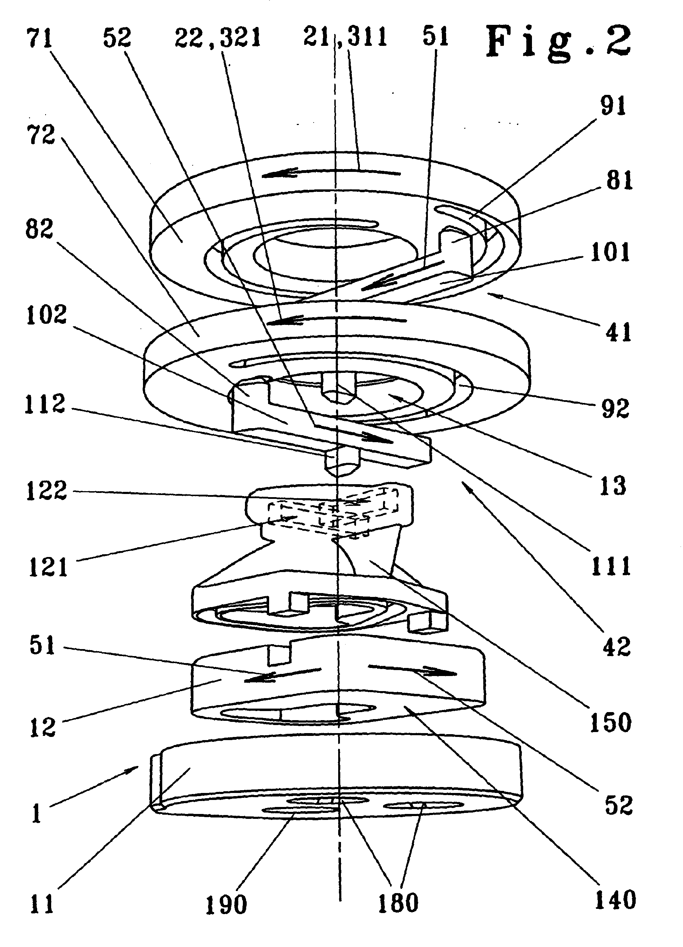

Die **Fig. 2** zeigt im unteren Bereich ein Lochscheiben-Mischventil 1, bestehend aus einer im nicht dargestellten Gehäuse festgelegten ersten Lochscheibe 11 mit je einer Zulaufbohrung 180 für Warm- und Kaltwasser und einer Auslaufbohrung 190 für das Mischwasser und einer mit ihr in einer Berührungsfläche 140 in Flächenkontakt angeordneten und in zwei zueinander orthogonalen translatorischen Freiheitsgraden als Steuergrößen 51,52 gegenüber ihr verschiebbaren zweiten Lochscheibe 12, die durch Formschluß mit dem Steuerteil 150 verbunden ist. Dieses hat zum einen die Aufgabe, die eintretenden Kalt- und Warmwasserströme um 180° umzulenken, zum andern trägt es zwei Steuernuten 121,122, deren Haupterstreckungsrichtung jeweils einem der beiden Steuergrößen 51,52 entspricht, zur Aufnahme der Mitnehmer 111,112.

Oberhalb des Steuerteils 150 sind zwei Kurvenscheibengetriebe als ebene Wandelgetriebe 41,42 in Flächenkontakt blockartig übereinander geschichtet. Ihre Glieder stützen und führen sich dadurch gegenseitig. Dabei ist jeweils unter einer ringförmigen Nutscheibe als Kurvenscheibe 71,72 mit jeweils einem einachsigen, rotatorischen Freiheitsgrad als Rotationsstellgröße 21,22, der bei diesem Ausführungsbeispiel jeweils dem Freiheitsgrad 311,321 des Drehstellers 31,32 entspricht, mit dem sie drehfest verbunden ist, ein Schieber 101,102 angeordnet, der mit seiner Kulisse 81,82 in der spiralförmigen Führungsnut 91,92 auf der Unterseite der Nutscheibe geführt wird. Die beiden Kurvenscheibengetriebe wandeln die zwei durch die Ventilkonstruktion vorgegebenen, zueinander orthogonalen Verschiebungen als Steuergrößen 51,52 der Lochscheibe 12 in einachsige Drehungen der Kurvenscheiben 71,72 mit begrenztem Drehmoment und großzügigem Stellwinkel als Rotationsstellgrößen 21,22 um. Die Drehachsen der beiden Kurvenscheiben 71,72 sind identisch, mittig zu ihren äußeren Mantelflächen und normal zur Berührungsfläche 140 der beiden Lochscheiben 11,12.

Der Mitnehmer 111 des oberen Wandelgetriebes 41 ragt durch den Durchlass 13 der Kurvenscheibe 72 des unteren Wandelgetriebes 42 bis in die Steuernut 122 des Steuerteils 150. Der Durchlass 13 ist eine kreisrunde, mittige, zur Drehachse der Kurvenscheibe 72 konzentrische Lochung, die der Verschiebung der Steuergröße 51 des oberen Schiebers 101 ausreichend Spielraum gewährt und gestellfest ist, da ihre Mittelachse identisch ist mit der Drehachse der unteren Kurvenscheibe 72.

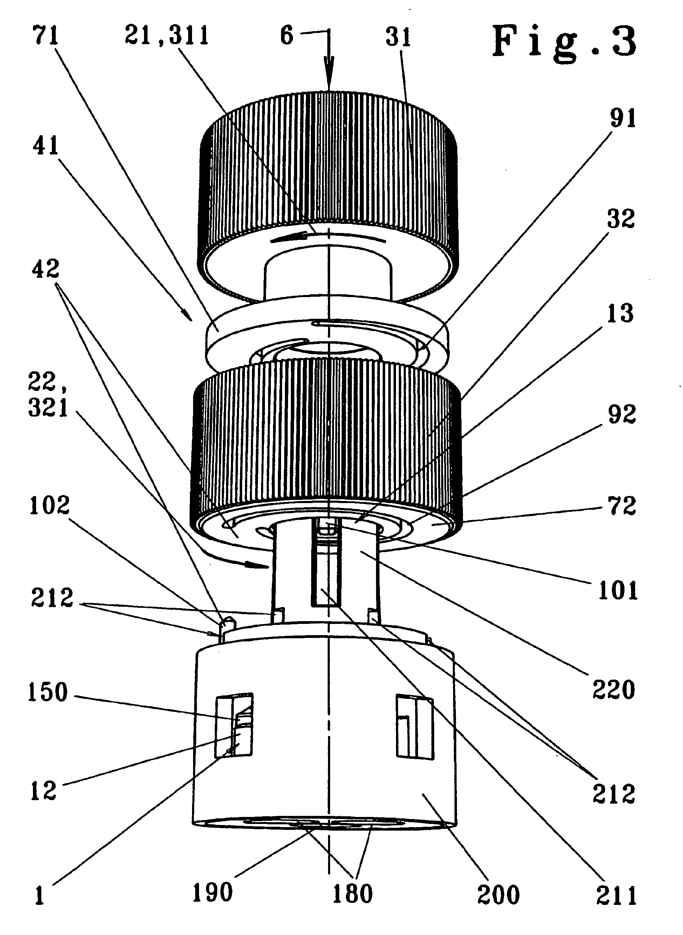

**Fig. 3** offenbart den Zusammenhang der beiden Drehsteller 31,32 mit gleicher Zugriffsrichtung 6 und der beiden Wandelgetriebe 41,42 und zeigt die gestellfeste Kartusche 200, die die relative Lage aller Glieder der Wandelgetriebe 41,42 und der nicht dargestellten ersten Lochscheibe des Lochscheiben-Mischventils 1 bestimmt. Sie selbst ist in dem nicht dargestellten Gehäuse festgelegt und trägt in ihrem Boden zwei Zulaufbohrungen 180 für die eintretenden warmen und kalten Volumenströme und eine Auslaufbohrung 190 für den Mischstrom.

Ihr unterer Teil ist als nahezu geschlossener Zylinder ausgebildet, der das Lochscheiben-Mischventil 1 und das Steuerteil 150 umschließt. Der obere Abschluss dieses Zylinders trägt eine Nut 212 zur Aufnahme und Führung des Schiebers 102 des unteren Wandelgetriebes 42 in Richtung seiner Verschiebung als Steuergröße 52.

Nach oben setzt sich die Kartusche 200 in einem Hals mit kreisringförmigem Querschnitt fort, der durch eine weitere Nut 211 zur Aufnahme und Führung des Schiebers 101 des oberen Wandelgetriebes 41 in Richtung seiner Verschiebung als Steuergröße 51 unterbrochen ist. Der Hals bildet eine gemeinsame Welle 220, auf der beide Kurvenscheiben 71,72 und somit auch die beiden mit ihnen jeweils paarweise drehfest verbundenen Drehsteller 31,32 in ihren Freiheitsgraden 311,321 drehbar gelagert sind. Dadurch sind sowohl die Drehachsen beider Drehsteller 31,32 als auch beider Kurvenscheiben 71,72 und damit der Rotationsstellgrößen 21,22 identisch. Die Freiheitsgrade 311,321 der Drehsteller 31,32 sind auch die der Kurvenscheiben 71,72 als Rotationsstellgrößen 21,22 und in diesem Ausführungsbeispiel identisch.

Aufgrund der einheitlichen Rotationssymmetrie um die vertikale Mittelachse als einzige, gemeinsame Drehachse kann das komplette Wandelgetriebe 41 und ein großer Teil des Wandelgetriebes 42 auf einfache Weise und sich selbst gegenseitig führend und stabilisierend innerhalb des Drehstellers 32 untergebracht werden.

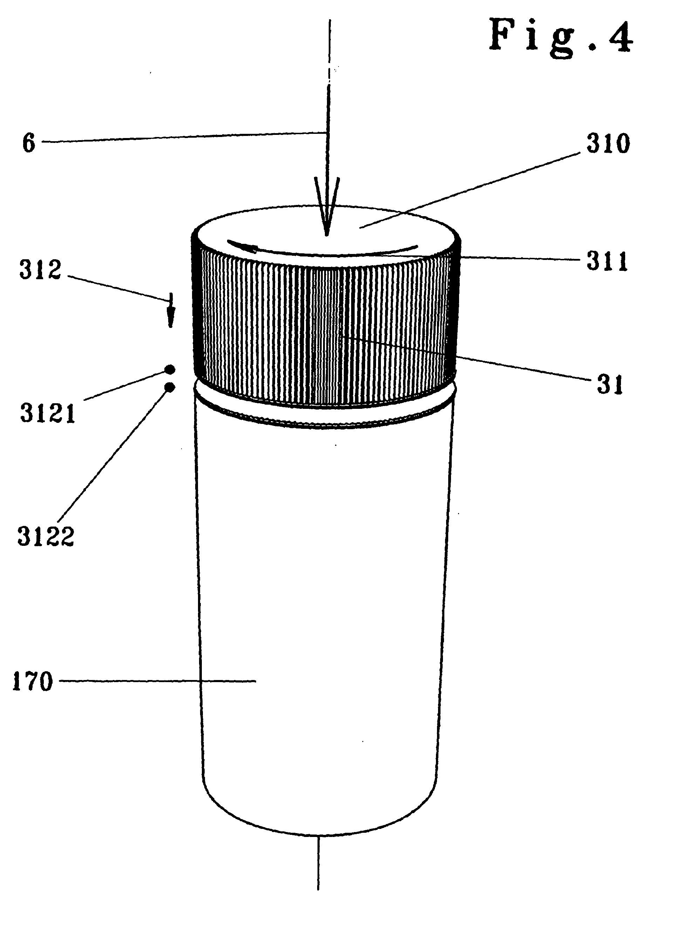

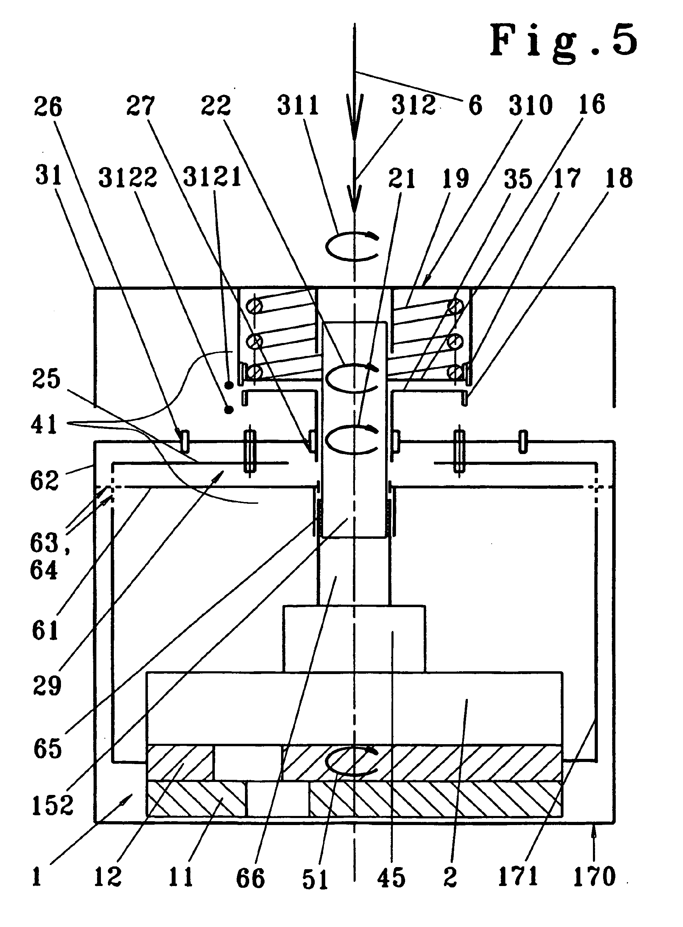

Im Ausführungsbeispiel der **Fig. 4** und 5 ist die Mischbatterie ein echter Einhand-Thermostatmischer mit Thermostatventil 2 als Mischventil zum Steuern der Steuergröße für das Mischungsverhältnis der eintretenden Volumenströme, das die Temperatur des austretenden Volumenstroms nach einem durch die Rotationsstellgröße 22 vorgegebenen Sollwert bestimmt und Lochscheibenventil 1 zum Steuern der Steuergröße 51 für die Größe des austretenden Volumenstroms als Schließventil, das durch die Rotationsstellgröße 21 gestellt wird.

Durch ein Schaltgetriebe als Wandelgetriebe 41 sind beide Rotationsstellgrößen 21,22 aus einer permanenten Zugriffsrichtung 6 im Zugriff einer Hand mit nur einem einachsigen Drehsteller 31 stellbar. Ein zusätzlicher translatorischer Freiheitsgrad 312 in Richtung der Drehachse seines ersten rotatorischen Freiheitsgrades 311 erlaubt das Hinzufügen einer radialen Wechselkupplung 17,18, die ihn je nach Endlage 3121,3122 in seinem Freiheitsgrad 312 bei der Drehung seines Freiheitsgrades 311 entweder über die Hohlwelle 35, Planetengetriebe 29 und das Innengehäuse 171 mit der beweglichen Lochscheibe 12 des Lochscheibenventils 1 oder über den Kranz 16, Achse 152, Schraubgewinde 65 und Schubhülse 66 mit dem Stellglied des thermostatischen Steuerelementes 45 des Thermostatventils 2 kuppelt, wodurch sein rotatorischer Freiheitsgrad 311 entsprechend zu der einen oder anderen Rotationsstellgröße 21,22 wird.

Innengehäuse 171 und Gehäuse 170 durchdringen sich gegenseitig durch Ausbildung von Durchbrüchen 64 und diese durchdringende Streben 63. Dazu ist das Gehäuse 170 in einen äußersten, geschlossenen Teil 62 und einen innersten, unter Ausbildung von zum Abstützungskontakt mit dem äußersten Teil 62 hin offenen Streben 63 durchbrochenen Teil 61, die zueinander verdrehfest und lösbar verbunden sind, geteilt. Im innersten Teil 61 sind die Achse 152 für die Rotationsstellgröße 22 und die Schubhülse 66 gelagert. Das Innengehäuse 171 ist zwischen diesen Teilen 61,62 angeordnet und mit Durchbrüchen 64 versehen, durch die die Streben 63 des innersten Teils 61 des Gehäuses 170 bis zum äußersten Teil 62 zentrierend und in Abstützungskontakt hindurch greifen. Die Breite der Streben 63 und die Größe der Durchbrüche 64 ist so abgestimmt, dass das Innengehäuse 171 gegenüber dem zweiteiligen Gehäuse 170 um die maximale Steuergröße 51 als Drehwinkel der beweglichen Lochscheibe 12 des Lochscheibenventils 1 von etwa 65 bis 80° verdrehbar ist.

Die Steuergröße 51 wird über das Innengehäuse 171 zur Drehung des Planetenträgers 25. Das Hohlrad 26 ist im äußersten Teil 62 des Gehäuses 170 festgelegt. Die resultierende Drehung des Sonnenrades 27 mit begrenztem Drehmoment und vergrößertem Drehwinkel von vorteilhaft über 250° bildet die Rotationsstellgröße 21. Das Übersetzungsverhältnis ist vorteilhaft 1,6 bis 4, empfehlenswert über 2. Wechselkupplung 17,18 und das Planetengetriebe 29 bilden zusammen das Schaltgetriebe als Wandelgetriebe 41.

Durch eine Feder 19 wird die Wechselkupplung 17,18 als Voreinstellung in der Endlage 3121 gehalten, so dass das Stellen der Rotationsstellgröße 21 immer direkt, sicher und praktisch "blind" automatisch, ohne zusätzlichen Kupplungsvorgang möglich ist. Das entspricht der ergonomischen Priorität für das Stellen der Größe des austretenden Volumenstroms, das auch Start und Schluss des Wasserzapfens bestimmt. Zum Wechsel in die Endlage 3122 und damit zur Rotationsstellgröße 22 ist dann die Federkraft durch eine Druckkraft in Zugriffsrichtung 6 zu überwinden und während der gesamten Dauer der Einstellung aufrechtzuerhalten. Das kann durch Anschlag der oberen Endfläche 310 des Drehstellers 31 in der Höhlung der in Zugriffsrichtung 6 greifenden Hand bewirkt werden, wenn die Höhe des Drehstellers 31 größer als die Tiefe der Höhlung gewählt wird oder durch einen sicheren Reibschluß zwischen den stellenden Fingerkuppen und der Außenmantelfläche des Drehstellers 31, z. B. durch eine Umfangsriffelung.

Dementsprechend sind im Rahmen der Ansprüche auch anderweitige Ausgestaltungen und Modifikationen denkbar und möglich. Der Gegenstand der Erfindung ist nicht auf die in den Zeichnungen dargestellten und vorstehend beschriebenen Ausführungsbeispiele beschränkt.

## Patentansprüche

1. Mischbatterie für zwei Flüssigkeiten unterschiedlicher Temperatur, bestehend aus einem Mischventil, einem Lochscheibenventil (1) mit einer die Größe eines austretenden Volumenstroms bestimmenden Steuergröße (51) und zumindest einem gegenüber einem ortsfesten Gehäuse (170) in einem rotatorischen Freiheitsgrad (311) gelagerten, zu diesem in seiner Außenform im wesentlichen invarianten Drehsteller (31) mit stirnseitiger Zugriffsrichtung (6), durch dessen Drehung zumindest eine erste von zwei unabhängigen, koaxialen Rotationsstellgräßen (21,22) zum Steuern der Größe oder der Temperatur eines austretenden Volumenstroms stellbar ist, **gekennzeichnet durch** zumindest ein Versetzungs- und/oder Umlenkungs- Wandelgetriebe (41) **durch** das Bewegungsart, -lage und/oder -größe der Steuergröße (51) in die erste Rotationsstellgröße (21) auf einer zur Gleitebene des Lochscheibenventils (1) insbesondere parallelen Ebene überführbar ist/sind.

2. Mischbatterie nach Anspruch 1, **dadurch gekennzeichnet, dass** das insbesondere ebene Wandelgetriebe (41) zu seiner Antriebsachse als Drehachse der Rotationsstellgröße (21) im wesentlichen rotationssymmetrisch, vorzugsweise im wesentlichen in seiner Gesamtform als Kreisscheibe ausgebildet ist.

3. Mischbatterie nach einem der Ansprüche 1 oder 2 **dadurch gekennzeichnet, dass** die Mischbatterie einen Einhandmischer bildet, bei dem nach nur einem Zugriff einer Hand in insbesondere permanenter Zugriffsrichtung (6) wahlweise eine der beiden Rotationsstellgrößen (21,22) aus vorzugsweise im wesentlichen nur einer Handposition einstellbar ist.

4. Mischbatterie nach einem der Ansprüche 1 bis 3, **dadurch gekennzeichnet, dass** zumindest eine, insbesondere jeweils eine der beiden Rotationsstellgrößen (21,22) mittels zweier auf jeweils einander etwa gegenüber liegenden Seiten der Außenmantelfläche des Drehstellers (31) anlegbarer Fingerkuppen auswählbar ist und so mittels nur einer vorzugsweise über den gesamten Stellbereich permanent in einer Position, insbesondere in Zugriffsrichtung (6), verbleibenden Hand wahlweise die beiden Rotationsstellgrößen (21,22) einstellbar sind.

5. Mischbatterie nach einem der Ansprüche 1 bis 4, **dadurch gekennzeichnet, dass** die Rotationsstellgröße (22) zum Stellen der Größe des austretenden Volumenstroms aus Zugriffsrichtung (6) direkter, insbesondere über den endseitigen Drehsteller (31), und mit nicht wesentlich größerem Drehmoment als die Rotationsstellgröße (21) zum Stellen der Temperatur stellbar ist.

6. Mischbatterie nach einem der Ansprüche 1 bis 5, **dadurch gekennzeichnet, dass** das Lochscheibenventil (1) das Mischventil ist und durch die Rotationsstellgröße (22) das Verhältnis von zwei über die Zulaufbohrungen (180) in das Mischventil eintretenden Volumenströmen von Hand einstellbar ist.

7. Mischbatterie nach einem der Ansprüche 1 bis 5, **dadurch gekennzeichnet, dass** das Lochscheibenventil (1) ein Schließventil ist und die Temperatur des austretenden Volumenstroms durch ein Thermostatventil (2) als Mischventil nach der Rotationsstellgröße (22) als Sollwert gesteuert wird.

8. Mischbatterie nach Anspruch 7, **dadurch gekennzeichnet, dass** die Mischbatterie das Gehäuse (170) und ein Innengehäuse (171) umfasst, die sich unter Ausbildung von Streben (63) und Durchbrüchen (64) teilweise durchdringen und das Gehäuse (170) insbesondere zweiteilig aus einem innersten Teil (61) und einem äußersten Teil (62) aufgebaut ist, zwischen denen zumindest ein Teil des Innengehäuses (171) angeordnet ist.

9. Mischbatterie nach einem der Ansprüche 1 bis 8, **gekennzeichnet durch** einen zweiten in einem rotatorischen Freiheitsgrad (321) gelagerten, zu seiner Drehachse im wesentlichen rotationssymmetrischen Drehsteller (32) insbesondere gleicher Zugriffsrichtung (6), mithilfe dessen über seinen Freiheitsgrad (321) die zweite Rotationsstellgröße (22) stellbar ist, wobei vorzugsweise die Stellbewegung der Fingerkuppe der zugeführten Hand in zumindest nahezu jeder der Relativ-Drehstellungen beider Drehsteller (31,32), insbesondere **durch** Verschiebung der Fingerkuppen von einem zum anderen Drehsteller (31,32), in eine der beiden Rotationsstellgrößen (21,22) wahlweise schaltbar ist.

10. Mischbatterie nach einem der Ansprüche 1 bis 8, **dadurch gekennzeichnet, dass** das Wandelgetriebe (41) ein Schaltgetriebe, insbesondere mit einer Wechselkupplung (17,18), ist, durch das die Drehung des Drehstellers (31), vorzugsweise über axiale Verschiebung des Drehstellers (31), in eine der beiden Rotationsstellgrößen (21,22) wahlweise schaltbar ist.

11. Mischbatterie nach einem der Ansprüche 1 bis 10, **gekennzeichnet durch** ein zumindest zu einem Großteil vorzugsweise innerhalb des Drehstellers (31) angeordnetes Planetengetriebe als Wandelgetriebe (41), dessen Sonnenrad (27) insbesondere mit dem Drehsteller (31) mit identischer Drehachse drehfest verbindbar ist.

12. Mischbatterie nach einem der Ansprüche 1 bis 11, **gekennzeichnet durch** zwei Steuergrößen (51,52), die voneinander unabhängige Freiheitsgrade, vorzugsweise zueinander orthogonale Verschiebungen, einer ersten beweglichen Lochscheibe (12) gegenüber einer zweiten Lochscheibe (11) des Lochscheibenventils (1) als insbesondere Mischventil sind.

13. Mischbatterie nach Anspruch 12, **gekennzeichnet durch** ein zweites insbesondere ebenes Wandelgetriebe (42), mit dem die zweite Steuergröße (52) des Lochscheibenventils (1) als Mischventil oder eines zweiten Ventils in die zweite Rotationsstellgröße (22) umwandelbar ist.

14. Mischbatterie nach einem der Ansprüche 1 bis 13, **dadurch gekennzeichnet, dass** zumindest ein Wandelgetriebe (41,42) ein Kurvenscheibengetriebe ist, das insbesondere aus einer Nutscheibe als Kurvenscheibe (71,72) und einem mit einer Kulisse (81,82) in einer Führungsnut (91,92) geführten Schieber (101,102) gebildet ist, der vorzugsweise in einer Nut (211,212) einer Kartusche (200) in Richtung einer Verschiebung als Steuergröße (51,52) verschiebbar gelagert ist und insbesondere mit einem Mitnehmer (111,112) in eine Steuernut (121,122) eingreift, die mit der beweglichen Lochscheibe (12) vorzugsweise über ein Steuerteil (150) in Abstützungskontakt steht.

15. Mischbatterie nach einem der Ansprüche 13 oder 14, **dadurch gekennzeichnet, dass** zwei insbesondere ebene Wandelgetriebe (41,42) in Flächenkontakt übereinander angeordnet sind, von denen zumindest ein zweites Wandelgetriebe (42) einen gestellfesten Durchlass (13) für die Kraftübertragung des ersten Wandelgetriebes (41) offen lässt, wobei in einem Kurvenscheibengetriebe insbesondere die Kurvenscheibe (71,72) mittig gelocht als Ring ausgebildet ist und bei zwei Kurvenscheibengetrieben jeweils Kurvenscheibe (71,72) und Schieber (101,102) abwechselnd übereinander mit vorzugsweise identischen Drehachsen ihrer Kurvenscheiben (71,72) angeordnet sind.

## Claims

1. Mixing faucet for two liquids with different temperatures, consisting of a mixing valve, a perforated plate valve (1) with an actuation quantity (51) that determines the volume of an outflow, and at least one rotary actuator (31) mounted in a rotary degree of freedom (311) in relation to a fixed housing (170) and substantially invariant in relation to it at least in its external shape, accessible from the front direction (6), the rotation of the said rotary actuator being capable of setting at least the first of two independent coaxial rotational control variables (21, 22) to control the volume or temperature of an outflow, **characterised by** having at least one mechanical converter (41), by means of which the type of movement, position and/or volume of the actuation quantity (51) is/are convertible to the first rotational control variable (21) on a plane in particular parallel to the slip plane of the perforated plate valve (1).

2. Mixing faucet according to claim 1 or 2 **characterised in that** the, in particular, plane mechanical converter (41) is formed in substantially rotational symmetry to its drive axis as the axis of rotation of rotational control variable (21), preferably substantially in the general form of a circular plate.

3. Mixing faucet according to any of claims 1 or 2 **characterised in that** the mixing faucet forms a one-hand mixer, in which either of the two rotational control variables (21, 22) can be adjusted selectively in a preferably substantially single hand position after only one access by one hand, in particular in the permanent direction of access (6).

4. Mixing faucet according to any of claims 1 to 3, **characterised in that** at least one, in particular one of each of the two rotational control variables (21, 22) is selectable by two fingertips that can be placed on approximately opposite sides of the outer envelope surface of the rotary actuator (31), such that either of the two rotational control variables (21, 22) is selectively adjustable by one hand, which remains in a preferably permanent position over the entire range of adjustment, more particularly in the direction of access (6).

5. Mixing faucet according to any of claims 1 to 4 **characterised in that** the rotational control variable (22) to set the volume of the outflow is adjustable more directly in the direction of access (6), in particular via the rotary actuator (31) at the end, and with a torque that is not substantially larger than that required by the rotational control variable (21) for adjusting the termperature.

6. Mixing faucet according to any of claims 1 to 5 **characterised in that** the perforated plate valve (1) is the mixing valve and the ratio of two inflows entering the mixing valve from two inlet holes (180) is adjustable by hand by means of the rotational control variable (22) as the set point.

7. Mixing faucet according to any of claims 1 to 5, **characterised in that** the perforated plate valve (1) is a closing valve and the temperature of the outflow is controlled by a thermostatic valve (2) as a mixing valve according to rotational control variable (22) as the set point.

8. Mixing faucet according to claim 7, **characterised in that** the mixing faucet comprises the housing (170) and an inner housing (171), which partially interpenetrate each other by forming struts (63) and openings (64), and the housing (170) is more particularly a two-part structure consisting of an innermost portion (61) and an outermost portion (62), between which at least one portion of the inner housing (171) is arranged.

9. Mixing faucet according to any of claims 1 to 8, **characterised by** having a second rotary actuator (32) mounted in a rotatory degree of freedom (321) in substantially rotational symmetry to its axis of rotation, more particularly with the same direction of access (6), with the help of which the second rotational control variable is ajdustable by its degree of freedom (321), whereby preferably the adjustment movement of the fingertips of the accessing hand is selectively switchable to at least almost any of the relative rotational adjustments of the two rotary actuators (31, 32), in particular from one rotary actuator (31, 32) to the other by displacement of the fingertips into one of the two rotational control variables (21, 22).

10. Mixing faucet according to any of claims 1 to 8 **characterised in that** the mechanical convertert (41) is a switching gear in particular with an interchangeable coupling (17, 18), through which the rotation of the rotary actuator (31), preferably by axial displacement of the rotary actuator (31) can be selectively switched to one of the two rotational control variables (21, 22).

11. Mixing faucet according to any of claims 1 to 10 **characterised by** having a planetary gear as th mechanical converter (41) preferably arranged at least largely inside the rotary actuator (31); the sun gear (27) of the said planetary gear being connectable torsion resistantly with an identical axis of rotation to, in particular, the rotary actuator (31).

12. Mixing faucet according to any of claims 1 to 11 **characterised by** having two control variables (51, 52), which are degrees of freedom independent of each other, preferably orthogonal displacements to one another of a first movable perforated (12) plate in relation to a second perforated plate (11) of the perforated plate valve (1) more particularly as a mixing valve.

13. Mixing faucet according to claim 12, **characterised by** a second more particularly plane mechanical converter (42), with which the second control variable (52) of the perforated plate valve (1) as the mixing valve or of a second valve is convertible into the second rotational control variable (22).

14. Mixing faucet according to any of claims 1 to 13 **characterised in that** at least one mechanical converter (41, 42) is a cam disc gear that is made up of, in particular, a grooved disc as the cam disc (71, 72) and a slider (101, 102), which is guided with a motion link (81, 82) in a guide groove (91, 92), said slider (101, 102) being mounted slidably preferably in a groove (211, 212) of a cartridge (200) in the direction of a displacement as an actuation quantity (51, 52) and engaging in particular with a dog (111, 112) in a control groove (121, 122), which is in supporting contact with a movable perforated plate (12) preferably via a controller (150).

15. Mixing faucet according to any of claims 13 or 14, **characterised in that** two, in particular, flat mechanical converters (41, 42) are arranged in surface contact on top of each other, of which at least a second mechanical converter (42) leaves open a fixed opening (13) for transmission of the forces from the first mechanical converter (41), whereby in particular the cam disc (71, 72) in a cam disc gear has a perforation at the center and is ring-shaped, and when there are two cam disc gears, cam discs (71, 72) and slider (101, 102) are each arranged alternatingly on top of each other with preferably identical axes of rotation of their cam discs (71, 72).

## Revendications

1. Mélangeur pour deux liquides de températures différentes, consistant en une valve de mélange, une valve à plaque perforée (1) avec un paramètre de commande (51) déterminant le volume d'un débit de sortie, et au moins un dispositif de commande rotatif (31) monté avec un degré de liberté en rotation (311) par rapport à un boîtier fixe (170), dont fait partie un dispositif de commande rotatif (31) principalement invariable dans sa forme extérieure avec direction d'accès (6) sur la face avant, et par rotation duquel au moins une première de deux variables de commandes coaxiales en rotation (21,22) peut être réglée pour la commande du volume ou de la température d'un débit en sortie, **caractérisé en ce que** au moins un réducteur-convertisseur (41), par lequel le type de mouvement, la position et/ou le volume du paramètre de commande (51) est/sont convertible(s) dans la première variable de commande en rotation (21) sur un plan en particulier parallèle au plan de glissement de la valve à plaque perforée.

2. Mélangeur selon la revendication 1, **caractérisé en ce que** en particulier le réducteur-convertisseur plat (41) est formé substantiellement en symétrie par rotation par rapport à son axe d'entraînement en tant qu'axe de rotation de la variable de commande en rotation (21) de préférence dans sa forme entière en tant que plaque circulaire.

3. Mélangeur selon l'une des revendications 1 ou 2 **caractérisé en ce que**, le mélangeur forme un mélangeur à commande unique dans lequel chacune des variables de commande en rotation (21, 22) peut être réglée de manière sélective de préférence dans une position substantiellement manuelle après un seul accès d'une seule main, en particulier dans la direction d'accès permanente (6).

4. Mélangeur selon l'une des revendications 1 à 3, **caractérisé en ce qu'**au moins une, en particulier chacune des deux variables de commande en rotation (21, 22) peut être réglée de manière sélective au moyen de deux coupelles pour les doigts situées sur des côtés approximativement opposés de la surface de l'enveloppe extérieure des dispositifs de commande rotatifs (31) de sorte que chacune des variables de commande en rotation (21, 22) peut être réglée de manière sélective par une main qui demeure dans une position de préférence permanente sur toute la plage de réglage, particulièrement dans la direction d'accès (6).

5. Mélangeur selon l'une des revendications 1 bis 4, **caractérisé en ce que** la variable de commande en rotation (22) destinée à régler le volume du débit en sortie est réglable de manière plus directe à partir de la direction d'accès (6), en particulier par le dispositif de commande rotatif (31) situé à l'extrémité, et avec un couple qui n'est pas substantiellement plus important que celui qui est nécessaire à la variable de commande en rotation (21) pour régler la température.

6. Mélangeur selon l'une des revendications 1 bis 5, **caractérisé en ce que** la valve à plaque perforée (1) est la valve de mélange et que le rapports de deux débits entrant dans la valve de mélange par les trous d'arrivée (180) est réglable manuellement au moyen de la variable de commande en rotation (22).

7. Mélangeur selon l'une des revendications 1 à 5, **caractérisé en ce que** la valve à plaque perforée (1) est une valve de fermeture et que la température du débit de sortie est contrôlée en tant que valeur de consigne par une valve à thermostat (2) en tant que valve de mélange selon la variable de commande en rotation (22).

8. Mélangeur selon la revendication 7, **caractérisé en ce que**, le mélangeur comprend le boîtier (170) et un boîtier intérieur (171) qui s'interpénètrent partiellement en formant des montants (63) et des passages (64) et que le boîtier (170) est en particulier une structure en deux parties, une partie intérieure (61) et une partie extérieure (62) entre lesquelles est agencée au moins une partie du boîtier intérieur (171).

9. Mélangeur selon l'une des revendications 1 à 8, **caractérisé par** un second dispositif de réglage rotatif (32) monté avec un degré de liberté en rotation (321), principalement symétrique par rotation par rapport à son axe de rotation, principalement avec la même direction d'accès (6), à laide duquel la deuxième variable de commande en rotation (22) est réglable par son degré de liberté (321), à laquelle occasion le mouvement de réglage des coupelles de doigts de la main qui accède peut de préférence commuter de manière sélective sur au moins pratiquement chacune des positions relatives de rotation des deux dispositifs de commande rotatifs (31,32), d'un dispositif de commande rotatif sur l'autre (31,32), en particulier par déplacement des coupelles dans l'une des variables de commande en rotation (21,22).

10. Mélangeur selon l'une des revendications 1 à 8, **caractérisé en ce que** le réducteur-convertisseur (41) est un réducteur de commande en particulier avec un accouplement interchangeable (17,18), par lequel il est possible d'activer de manière sélective la rotation du dispositif de commande rotatif (31), de préférence par déplacement axial du dispositif de commande rotatif (31), par rapport à l'une des variables de commande en rotation (21,22).

11. Mélangeur selon l'une des revendications 1 à 10, **caractérisé en ce qu'**il dispose, en tant que réducteur-convertisseur (41), d'un réducteur planétaire, agencé au moins en grande partie de préférence à l'intérieur du dispositif de commande rotatif (31), et dont la roue solaire (27) est connectable de manière résistante à la torsion par un axe de rotation en particulier identique au dispositif de commande rotatif (31).

12. Mélangeur selon l'une des revendications 1 à 11, **caractérisé par** deux paramètres de commande (51,52), qui sont des degrés de liberté indépendants l'un de l'autre, de préférence des déplacement orthogonaux de la première plaque perforée mobile (12) par rapport à une seconde plaque perforée (11) de la valve à plaque perforée (1) en particulier en tant que valve de mélange.

13. Mélangeur selon la revendication 12, **caractérisé par** un deuxième réducteur-convertisseur en particulier plat (42), avec lequel la deuxième quantité de commande (52) de la valve à plaque perforée (1) en tant que valve de mélange ou d'une seconde valve est convertible en seconde variable de commande en rotation (22).

14. Mélangeur selon l'une des revendications 1 à 13, **caractérisé en ce qu'**au moins un réducteur-convertisseur (41,42) est un réducteur à came qui est constitué en particulier par une plaque à rainure en tant que came (71,72) et par un tiroir (101, 102) muni d'un coulisseau (81,82) guidé dans une rainure de guidage (91,92), qui est logé de préférence dans une rainure (211,212) d'une cartouche (200) dans la direction du déplacement en tant que quantité de commande (51,52) et pénètre en particulier avec un entraîneur (111,112) dans une rainure de commande (121,122), et qui est en contact portant avec la plaque perforée (12) de préférence par le biais d'une pièce de commande (150).

15. Mélangeur selon l'une des revendications 13 ou 14, **caractérisé en ce que** deux réducteurs-convertisseurs (41, 42) en particulier plats sont superposés en contact superficiel, réducteurs-convertisseurs dont au moins un second réducteur-convertisseur (42) laisse ouvert un passage permanent (13) pour la transmission des forces du premier réducteur-convertisseur (41), le disque de came (71,72) en particulier dans un réducteur à came étant doté d'un trou central et formé en anneau et, lorsqu'il y a deux réducteurs à came, les disques de cames (71, 72) et les tiroirs (101,102) étant chacun superposés alternativement avec de préférence des axes de rotation identiques de leurs cames (71,72).
